# EUROPÄISCHE PATENTSCHRIFT

(11) **EP 0 742 083 B1**
(45) Veröffentlichungstag und Bekanntmachung des Hinweises auf die Patenterteilung: **22.03.2000**
(21) Anmeldenummer: 96101312.5
(22) Anmeldetag: 31.01.1996
(51) Int. Cl.: B25G 1/10

(54) **Handgriff für Küchenarbeitsgerät**
Handle for kitchen utensils
Marche pour ustensiles de cuisine

(30) Priorität: 07.04.1995 DE 19513245
(43) Veröffentlichungstag der Anmeldung: 13.11.1996
(73) Patentinhaber: LEIFHEIT Aktiengesellschaft, D-56377 Nassau (DE)
(72) Erfinder: Schülein, Rolf Günter, D-56379 Singhofen (DE)

(56) Entgegenhaltungen:
- EP-A- 0 208 942
- EP-A- 0 353 919
- EP-A- 0 449 554
- DE-A- 4 406 149
- DE-U- 8 808 942
- GB-A- 2 011 566
- GB-A- 2 208 156
- GB-A- 2 225 741
- GB-A- 2 274 615
- US-A- 2 520 355

## Beschreibung

Die Erfindung bezieht sich auf einen Handgriff fuer ein Kuechenarbeitsgeraet gemaeß dem Oberbegriff des Anspruchs 1.

Ein solcher Handgriff ist aus der EP-A-449554 bekannt.

Handgriffe fuer Arbeitsgeraete werden zumindest im hoeheren Qualitaetsniveau heute durchweg nach ergonomischen Gesichtspunkten ausgebildet. Dies ist besonders wichtig bei Handgriffen, die mit Geraeten verbunden sind, die permanent im Gebrauch sind. So ist es heute weit verbreitet, daß Messergriffe im Fleischer-handwerk, Griffe fuer Schraubendreher, Zangengriffe und aehnliche, rein nach ergonomischen Gesichtspunkten ausgebildet sind. Natuerlich braechte die Ausbildung von Handgriffen fuer Kuechengeraete nach ergonomischen Gesichtspunkten den gleichen Vorteil. Leider entspricht eine hervorragende Ergonomie in aller Regel nicht den designmaeßigen Anforderungen an ein Kuechengeraet, wie z.B. eine Loeffelgarnitur, ein Dosenoeffner, ein Deckeloeffner, eine Fleischgabel oder auch Kuechenmesser.

Durch die EP-B-0 176 486 wurde ein Handgriff fuer ein Kuechenmesser bekannt, dessen Kunststoffkern mit einer Elastomerschicht verkleidet ist. Die Elastomerschicht wird zur sicheren Verankerung an einigen Stellen von dem Kunststoffkern durchdrungen. Die Praxis hat nun gezeigt, daß ein elastomerbeschichteter Griff einen Mangel aus der Ergonomie bezueglich der Handhabung und der Unfallsicherheit teilweise ausgleichen kann; ihm fehlt es aber an optischem Glanz und an der notwendigen Handfreundlichkeit. Es wird durch den Elastomer ein unangenehmes Empfinden ausgeloest.

Durch die FR-A-2 600 574 wurde ein Messerhandgriff bekannt, bei dem zusaetzlich eine Griffmulde vorgelagert ist, um eine leichtere Handhabung zu erreichen. Zusaetzlich soll damit eine groeßere Kraft uebertragen werden. Da es sich hierbei um ein zusaetzliches Bauteil handelt, kann der Messerhandgriff in aesthetischer Sicht nicht befriedigen. Zudem ist die zusaetzlich aufgesetzte Griffschale extrem reinigungsunfreundlich.

Weiter sind durch die DE-A-44 06 149, die EP-A-0 208 942 und die DE-U-88 08 942 Griffe für Werkzeuge bekannt, bei denen aus Kunststoff gespritzte Hefte mit Zonen unterschiedlich harter Kunststoffe, von denen der härtere unverformbar ist und der weichere geringere elastische Verformungen zuläßt, vorgesehen sind, wobei alle eine zentral liegende Aufnahmehöhlung für einen Schaft eines Funktionsteiles haben, die sich in dem aus härterem Kunststoff gefertigten Kemteil befindet. Nachteilig daran ist, daß die Griffzonen aus weicherem Kunststoff gleichmäßig über die Gesamtoberfläche verteilt sind. Diese sind weder nach ästhetischen noch nach ergonomischen Gesichtspunkten ausgelegt.

Dies gilt auch für die Ausführung gemäß der EP-A-0 449 554, bei dem die weicheren Griffzonen durch eine Lamellenstruktur gebildet sind.

Aufgabe der Erfindung ist es, einen gattungsgemäßen Handgriff für ein Küchenarbeitsgerät zu schaffen, dessen Handhabung verbessert ist, so daß eine weniger schnelle Ermüdung der Hand bzw. der Finger eintritt, die Griffigkeit für die Finger verbessert und die Druckbeanspruchung der Finger verringert wird, ein angenehmer Griff auch bei längerer Benutzung und eine genügende Gleitreibung erzielt werden kann, und der Griff auch ohne großen Andruck der Finger leicht gedreht werden kann.

Diese Aufgabe wird mit den Merkmalen des Anspruchs 1 geloest. In ueberraschender Weise hat es sich gezeigt, daß es vollkommen genuegt, lediglich in einem begrenzten Bereich rutschsicheres Material zu verwenden, waehrend der restliche Griffbereich aus hautsympathischem, weniger auf ergonomische Gegebenheiten ausgelegtem Kunststoff hergestellt ist. Die aesthetische Anmutung, eine Loeffelgarnitur wird in aller Regel mit als Schmuckstueck in der Kueche an die Wand gehaengt, kann bei trotzdem bester Handhabungsqualitaet wieder im Vordergrund stehen.

In weiterer Ausgestaltung der Erfindung ist es besonders vorteilhaft, dieses Griffteil aus Kunststoff im Zweikomponentenverfahren herzustellen. Dadurch wird eine molekulare Verbindung der beiden unterschiedlichen Kunststoffe erreicht, so daß absolute Spuelmaschinenfestigkeit erreicht wird.

Im Gegensatz zu einer Klebverbindung koennen auch keinerlei Schmutzspalten, die auch anfaellig gegen Bakterien sind, entstehen. Durch die Ausbildung der Fingerauflageteile in Fingerkuppengroeße wird neben dem praktischen Nutzen eine optisch aesthetische Aufwertung des Handgriffes erreicht. Dabei werden die Fertigungskosten nur geringfuegig erhoeht. Dabei koennen interessante Materialkombinationen gewaehlt werden. So bietet ein hochglaenzendes ABS als Grundmaterial mit einem Elastomer eine aeußerst zweckmaeßige Verbindung. Weiter bieten sich neben unterschiedlichen Grundmaterialien als Fingerauflageteil Silikon oder Weichplastik an. Ein Ausfuehrungsbeispiel der Erfindung wird im folgenden anhand der Zeichnungen weiter erlaeutert.
Es zeigen:

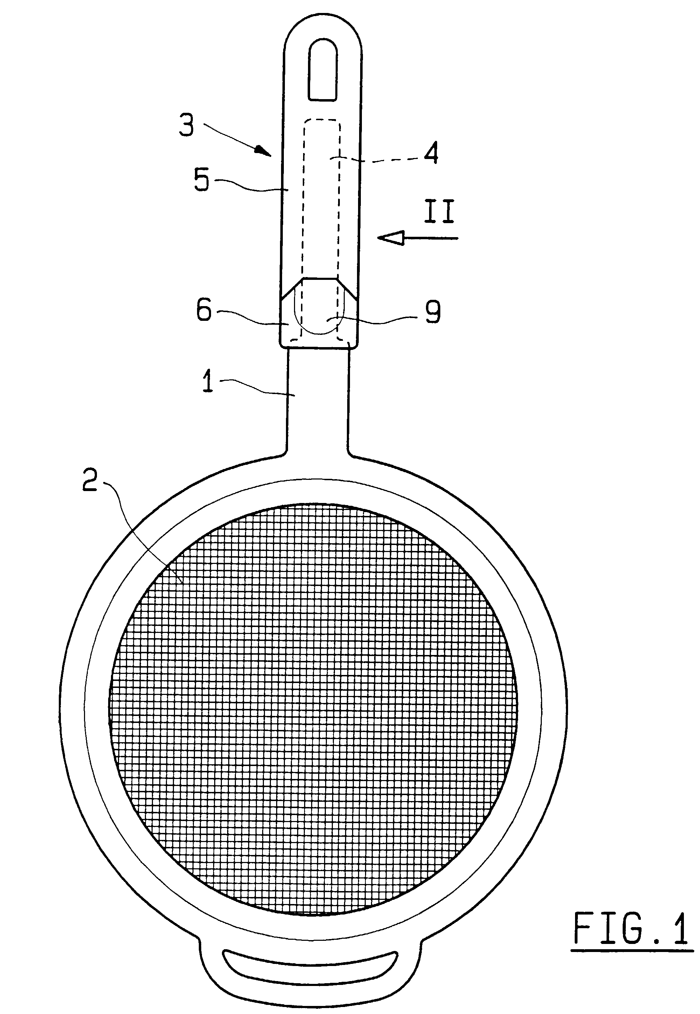

- Figur 1: eine Draufsicht auf ein Kuechensieb mit Handgriff,

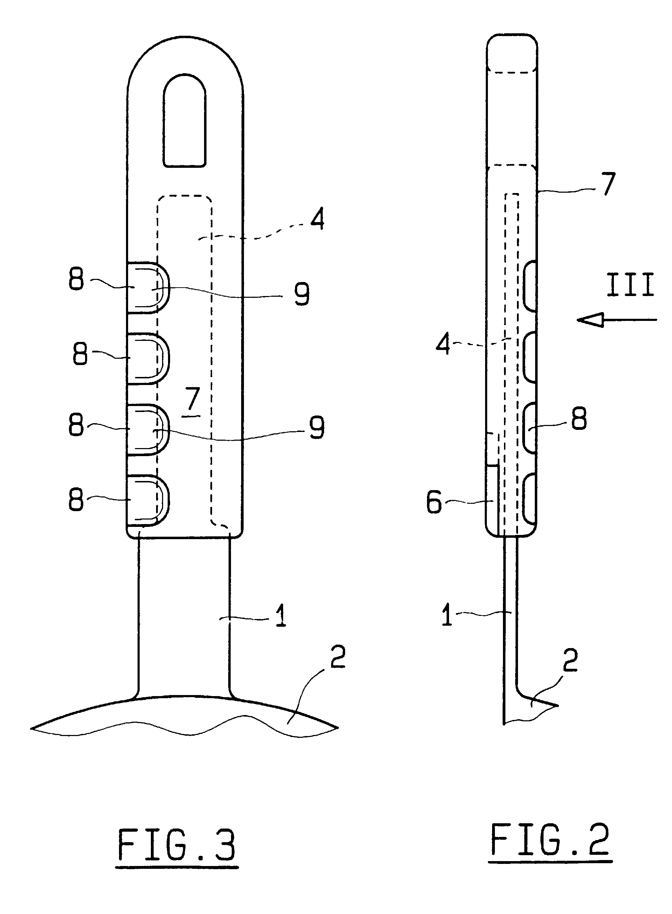

- Figur 2: eine Ansicht gemaeß Richtung II nach Figur 1 und
- Figur 3: eine Ansicht gemaeß Richtung III nach Figur 2.

Beispielhaft wurde als Kuechenarbeitsgeraet ein Kuechensieb dargestellt. Dieser Handgriff ist natuerlich auch einsetzbar fuer den Schneebesen, Schoepfloeffel, Pfannenwender, Messer, Gabeln, Puereestampfer usw.

An einem Stiel 1 des Kuechensiebes 2, der Stiel kann sowohl aus Kunststoff als auch aus Metall gefertigt sein, ist der Handgriff 3 angeformt. Der Stiel 1 geht dabei in den Kernbereich 4 ueber. Der Kernbereich 4 ist mit dem Griffteil 5 verbunden.

Bei Ausfuehrung des Stiels in Kunststoff ist Stiel 1, Kernbereich 4 und Griffteil 5 vorteilhafter Weise aus dem gleichen Kunststoffmaterial gefertigt. Dazu bieten sich je nach Verwendungszweck PP, ABS oder bei Einsatz unter hoeheren Temperaturen, wie z.B. bei einem Pfannenwender, auch Melamin an.

In das Griffteil 5 sind formschluessig Fingerauflageteile eingearbeitet. Diese werden im Zweikomponentenverfahren mit dem Griffteil einstueckig, d.h. in molekularer Verbindung, hergestellt, um einen nahtlosen Uebergang zu schaffen, so daß keine Keimnester entstehen koennen. Natuerlich ist es technich auch machbar, die Fingerauflageteile einzukleben; dabei ist aber insbesondere bei der Reinigung in Spuelmaschinen die Gefahr gegeben, daß sich die Teile loesen. Die Fingerauflageteile gliedern sich in eine Daumenauflage 6 und auf der Rueckseite 7 des Griffteiles 5 an geordnete Fingerauflageteile 8. Die Daumenauflage 6 sowie die Fingerauflageteile 8 sind jeweils mit einer Griffmulde 9 versehen.

Wie bereits erwaehnt, besteht das eigentliche Griffteil aus einem hautsympathischen Kunststoff wie PP, ABS oder aehnliche oder bei hoeherer Temperaturbelastung auch aus einem temperaturbestaendigen Duroplast, wie Melamin oder aehnlichem. Die Daumen- und Fingerauflageteile bestehen dagegen aus einem Elastomer. Bevorzugt wird dabei ein Elastomer mit einer Shore-Haerte von bis 50 eingesetzt. Auch hier kann die Materialwahl je nach Einsatzgebiet schwanken. Bei der Kombination Duroplast wird man einen ebenfalls temperaturbestaendigen Elastomer, wie z.B. Silikon, verwenden.

## Patentansprüche

1. Handgriff (3) für ein Küchenarbeitsgerät, bestehend aus einem das Funktionsteil (2) tragenden Kernbereich (4), einem mit diesem verbundenen Griffteil (5) einer Daumenauflage (6) und wenigstens einem Fingerauflageteil (8), dadurch gekennzeichnet, daß das Griffteil (5) aus einem Material mit einer Shore-Härte über 70, daß mehrere Fingerauflageteile vorgesehen sind und die Fingerauflageteile (6, 8), die sich in eine Daumenauflage (6) und auf der Rückseite (7) des Griffteiles (5) angeordnete Fingerauflageteile (8) gliedern, die jeweils mit einer Griffmulde (9) versehen sind, aus einem Material mit einer Shore-Härte unter 60 gefertigt sind, und daß die Fingerauflageteile (6, 8) in das Griffteil (5) integriert sind.

2. Handgriff nach Anspruch 1, dadurch gekennzeichnet, daß das Griffteil (5) und die Fingerauflageteile (6, 8) aus Kunststoff im 2-Komponentenverfahren hergestellt sind.

## Claims

1. Handle (3) for a kitchen utensil, consisting of a core section (4) supporting the functional part (2), a grip part (5) connected to the core section, a thumb rest (6) and at least one finger rest (8), characterized in that the grip part (5) is produced from a material having a Shore hardness in excess of 70, in that a plurality of finger rest parts are provided and the finger rest parts (6, 8), which break down into one thumb rest (6) and finger rest parts (8) arranged on the back (7) of the grip part (5), each of which are provided with a gripping depression (9), are produced from a material having a Shore hardness below 60, and in that the finger rest parts (6, 8) are integrated into the grip part (5).

2. Handle according to Claim 1, characterized in that the grip part (5) and the finger rest parts (6, 8) are produced from plastic by the two-component process.

## Revendications

1. Poignée (3) pour un ustensile de cuisine, constituée par une partie formant noyau (4), qui porte la partie fonctionnelle (2), un organe de préhension (5), relié à la partie formant noyau, d'une zone (6) d'application du pouce, et au moins une partie (8) d'application des doigts, caractérisée en ce que l'organe de préhension (5) est réalisé en un matériau possédant une dureté Shore supérieure à 70, que plusieurs parties pour l'application des doigts sont prévues, qui sont subdivisées en une partie (6) d'application du pouce et de parties (8) d'application des doigts qui sont disposées sur la face arrière (7) de l'organe de préhension (5) et qui comportent chacune une auge de préhension (9), sont réalisées en un matériau possédant une dureté Shore inférieure à 60, et que les parties (6,8) d'application des doigts sont intégrées dans l'organe de préhension (5).

2. Poignée selon la revendication 1, caractérisée en ce que l'organe de préhension (5) et les parties (6,8) d'application des doigts sont réalisées en une matière plastique dans le procédé à 2 constituants.
